# EUROPÄISCHE PATENTSCHRIFT

(11) **EP 0 394 190 B1**
(45) Veröffentlichungstag und Bekanntmachung des Hinweises auf die Patenterteilung: **10.11.1993**
(21) Anmeldenummer: 90810266.8
(22) Anmeldetag: 03.04.1990
(51) Int. Cl.: B60J 11/00

(54) **Halterungselement und Vorrichtung zur Befestigung einer Autoschutzplane**
Holding device and arrangement for the fixing of a motorcar awning
Dispositif de fixation et mécanisme pour attacher une bâche d'automobile

(30) Priorität: 19.04.1989 CH 1497/89
(43) Veröffentlichungstag der Anmeldung: 24.10.1990
(73) Patentinhaber: Wittwer, Walter, CH-8963 Kindhausen (CH)
(72) Erfinder: Wittwer, Walter, CH-8963 Kindhausen (CH); Peter, Bruno, CH-5305 Unterendingen (CH)
(74) Vertreter: Frei, Alexandra Sarah

(56) Entgegenhaltungen:
- CH-A- 601 039
- CH-A- 668 398
- DE-A- 1 655 878
- FR-A- 1 332 703
- US-A- 2 770 244

## Beschreibung

Die Erfindung bezieht sich auf ein Halterungselement gemäss Patentanspruch 1 und eine Vorrichtung zur Befestigung einer Autoschutzplane gemäss Patentanspruch 7.

Autoschutzplanen werden für verschiedenste Zwecke eingesetzt, wobei namentlich deren Funktion als Sonnenschutz, als Schutz gegen Vereisungen oder aber als Schutz gegen Ablagerung von Verschmutzungen auf dem Fahrzeug im Vordergrund steht. Derartige Schutzplanen haben in verschiedener Hinsicht der Anforderung nach Flexibilität und einfacher Handhabung zu genügen. Es wird nicht nur verlangt, dass verschiedenste Automodelle mit einer entsprechenden Vorrichtung ausgerüstet werden können, sondern ebenso wichtig ist eine einfache Montage und Demontage, wobei dies um so mehr im Vordergrund steht, wenn eine Verwendung der Schutzplane als Sonnenschutz oder Vereisungsschutz erfolgt, wird doch dann oft eine tägliche Montage bzw. Demontage erforderlich.

Aus dem Schweizer Patent Nr. 601 039 ist beispielsweise eine Vorrichtung zum Schutz des Wageninnenraumes bekannt, die einen her kömmlichen Gepäckträgern entsprechenden Aufbau auf dem Wagendach aufweist. An diesem Aufbau sind mehrere seitliche Planen vorgesehen, welche je nach Bedarf heruntergefaltet werden oder bei Nichtgebrauch auf diesen Aufbau gelegt werden. Eine andere Vorrichtung gemäss dem Schweizer Patent Nr. 668 398 verwendet einen an den Regenrinnen im Bereich der Dachvorderkante fixierten Bügel an dem ein Rouleau drehbar gelagert ist und nach Bedarf über die Windschutzscheibe heruntergezogen werden kann. Das Rouleau wird entweder unter die Scheibenwischer geklemmt oder mit mechanischen Mitteln oder Magneten befestigt. Im praktischen Einsatz sind diese und ähnliche Vorrichtungen nur beschränkt tauglich. Es erweist sich, dass diese Vorrichtungen während der Fahrt grundsätzlich demontiert werden müssen, da sie entweder den Einsatz eines eigentlichen Gepackträgers verunmöglichen und andererseits, insbesondere bei der Vorrichtung gemass dem Schweizer Patent Nr. 601 039, zusätzliche Vorkehrungen getroffen werden müssten um die Planen gegen den Fahrtwind zu fixieren. Ein grosser Nachteil besteht darin, dass die Vorrichtungen an den seitlich am Dach verlaufenden Regenrinnen befestigt werden müssen. Solche Regenrinnen sind aber nicht bei allen Fahrzeugtypen vorhanden, was insbesondere bei neueren Modellen häufig der Fall ist, so dass bei einer Vielzahl von Autos die herkömmlichen Vorrichtungen gar nicht eingesetzt werden können. Zudem besteht der Nachteil, dass diese Vorrichtungen (wie Dachgepäckträger) den jeweiligen Dimensionen der verschiedenen Fahrzeugtypen angepasst sein müssen, was eine aufwendigere Produktion erfordert und beim Abnehmer bei einem Wechsel des Fahrzeugs die Weiterverwendung einer solchen Schutzvorrichtung oft nicht mehr erlaubt. Beim Nichtgebrauch müssen die sperrigen Vorrichtungen abgenommen werden und oft, bspw. auf Reisen, im Gepäckraum des Fahrzeugs untergebracht werden.

Aus der US-A-2 770 244 ist auch eine Vorrichtung gemäß dem Oberbegriff des Anspruchs 1 zum Befestigen eines trag baren Ankleideraumes an einer Fahrzeugtüre bekannt. Die Befestigung am Fahrzeug geschieht über ein Halterungselement, das sich über zwei Befestigungsteile an zwei Stellen am Innenrand einer Fensteröffnung in der Fahrzeugtüre abstützt. Die beiden Befestigungsteile stützen einen Tragarm ab, an dem der Ankleidraum befestigt ist. Aus der FR-A-1 332 703 ist weiter eine Schutzabdeckung für die Fenster eines Autos bekannt, die über Hacken an der Regenrinne oder am Türrahmen sowie über Saugnäpfe an den Fensterscheiben befestigt werden kann.

Bei den letztgenannten beiden Vorrichtungen ist die Befestigung am Fahrzeug derart ausgebildet, dass mehrere Befestigungsstellen für eine Vorrichtung notwendig sind. Damit wird aber die Montage der Vorrichtung am Fahrzeug kompliziert und zeitaufwendig. Zudem haben alle diese Vorrichtungen den Nachteil, dass sie sich für die Verwendung an Cabriolets, insbesondere bei geöffnetem Dach nicht eignen, da die Befestigungsstellen teils ein festes Dach oder feste Fensterausschnitte oder feste Türrahmen voraussetzen.

Es ist deshalb Aufgabe der vorliegenden Erfindung, ein Halterungselement und eine Vorrichtung insbesondere zur Befestigung einer Autoschutzplane zu schaffen, welche die oben erwähnten Nachteile vermeidet und insbesondere eine einfache und schnelle Montage und Demontage gewährleistet, bei Nichtgebrauch eine Verpackung auf kleinem Raum zulässt, an verschiedenste Automodelle angepasst werden kann, dabei einfach und kostengünstig in der Herstellung ist und auch zusammen mit Dachgepäckträgern verwendet werden kann.

Diese Aufgabe wird durch die in Patentansprüchen 1 und 7 genannten Merkmale gelöst.

Anhand der beiden beiliegenden Figuren soll ein Ausführungsbeispiel der Erfindung näher erläutert werden.
- Fig. 1: zeigt erfindungsgemäss eine Autoschutzplane zusammen mit der Befestigungsvorrichtung in montiertem Zustand
- Fig. 2: zeigt ein erfindungsgemässes Halterungselement, aufgesetzt auf eine Autoscheibe
- Fig. 3: zeigt ein anderes Ausführungsbeispiel des Halterungselements, aufgesetzt auf der obere Türkante
- Fig. 4: zeigt ein Halterungselement mit Stangenabschnitt und Stützstrebe

In der folgenden Beschreibung wird insbesondere auf eine Autosonnenschutzplane Bezug genommen. Die entsprechenden Ausführungen gelten jedoch in entsprechender Weise auch für Schutzplanen mit anderen Funktionen, wobei je nach Bedarf die Halterung, Befestigung und Material für die Plane variiert werden können.

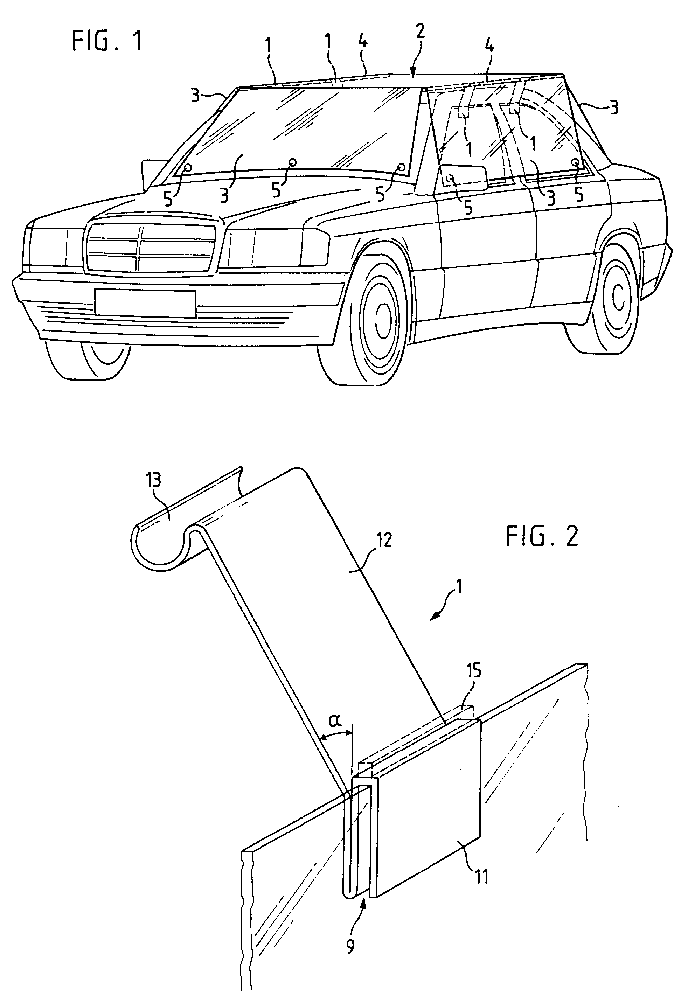

In Figur 1 ist die Schutzplane in montiertem Zustand dargestellt. Die eigentliche Schutzplane 2 wird durch ein Halterungssystem getragen, welches letztere im wesentlichen an den Autoscheiben gehaltert ist. Dazu wird - im dargestellten Fall mit einem Fahrzeug mit vier Fenstern, die je geöffnet werden können - an jeder Fensterscheibe ein Halterungselement 1 aufgesetzt. Diese Halterungselemente 1 dienen der Auflage von zwei seitlich in horizontaler Richtung über dem Dach und seitlich von diesem parallel zur Fahrzeuglängsrichtung verlaufenden Stangen 4. Diese Stangen 4 verhindern ein Aufliegen der Plane 2 auf dem Fahrzeugdach bzw. der Karosserie und stabilisiert die Plane bei Windbewegungen. Die Plane 2 wird diesfalls indirekt über diese Stangen 4 abgestützt. Letztere sind vorzugsweise als teleskopartig ausziehbare Stangen ausgebildet. Dies ermöglicht eine problemlose Anpassung an verschiedene Längen von Fahrzeuginnenräumen indem die Stangen 4 so weit ausgezogen werden, dass deren Enden in den Bereich über der Front- bzw. Heckscheibe zu liegen kommen. In ihrer Länge können die Stangen, die aus zwei oder mehr Abschnitten bestehen, nach Einstellung der Länge in herkömmlicher Weise, bspw. mit Spreizhülsen, fixiert werden. Über diese Halterungsvorrichtung 1, 4 ist die Schutzplane, bzw. deren seitlichen Lappen 3 zur Abdeckung der Fensterfront, gespannt und mittels mehreren Befestigungsmitteln 5 festgemacht. In einer vorzugsweisen Ausführungsform sind diese Befestigungsmittel als Saugnäpfe ausgebildet, die durch einfachen Druck an den Fensterscheiben oder der Karosserie befestigt werden können. Anstelle solcher Saugnäpfe können andere Befestigungsmittel wie bspw. elastische Spanner, Haken, etc. zur Verwendung kommen.

In Figur 2 ist ein Halterungselement 1 in einer bevorzugten Ausführungsform detailliert dargestellt. Im wesentlichen besteht das Element 1 aus drei funktionellen Teilen, die jedoch konstruktiv vorzugsweise einen Teil darstellen. Es sind dies ein Befestigungsteil 11, ein Tragarm 12 und eine Halterung 13. Vorliegend ist das Halterungselement einstückig aus einem Streifen aus Kunststoff oder Metall gebildet, der mehrmals gebeugt oder abgewinkelt ist. Die einstückige Ausgestaltung des Halterungselementes ermöglicht eine einfache und kostengünstige Herstellung. Der Befestigungsteil 11 ist hier als Klammerorgan ausgebildet, das in einfacher Weise über die leicht geöffnete Scheibe geschoben wird. Zum Schutz der Fahrzeugscheibe sowie als Absicherung gegen ein Verschieben kann die Innenseite des Befestigungsteils beschichtet sein; z.B. einen Gummibelag aufweisen. Dieser Befestigungsteil wird dadurch gebildet, dass das eine freie Ende des Streifens durch zweifaches Abwinkeln ein im Querschnitt U-förmiges Profil erhält, wobei dessen Stegbreite vorzugsweise 3 bis 8 mm und die Länge der Schenkel mindestens 20 mm beträgt. An der Scheibenaussenseite ist das Halterungselement parallel zum Schenkel um 180° abgebogen. Es wird dadurch in vorteilhafter Weise erreicht, dass die Materialstärke bei dem Schenkel, der vor allem druckbelastet ist, verdoppelt wird. Die beiden parallellaufenden Bereiche sind vorzugsweise verklebt.

Beim Schliessen der Scheibe wird das Halterungselement fixiert, wobei das Fenster im allgemeinen bis auf einen Spalt von ca. 5 mm (abhängig von der Materialstärke des Elements) geschlossen wird. Dadurch ist eine minimale Belüftung des Fahrzeugraumes gewährleistet. Die Einbruchssicherheit des Fahrzeugs ist nicht tangiert. Soll in speziellen Anwendungen eine besonders stabile Montage des Halterungselementes erreicht werden, so kann auf dem Befestigungsteil 11, bzw. auf der Aussenseite des Steges des U-Profils, ein Kamm 15 (gestrichelt in Figur 2 dargestellt) aufgesetzt oder durch Abwinklung gebildet sein. Dieser Kamm entspricht der Dicke einer Fensterscheibe, so dass beim Schliessen des Fensters der Kamm 15 anstelle des Fensters oben in den üblicherweise für das Fenster vorgesehenen Schlitz an der Türe eingreift. Dadurch wird der Befestigungsteil unten gegen das Fenster und oben gegen den Rahmen abgestützt, so dass auch grosse Belastungen durch das Halterungselement getragen werden können.

Damit die Plane in einem Abstand von der Karosserie und insbesondere vom Fahrzeugdach gehalten wird, ist der schräg nach oben und seitlich nach aussen verlaufender Tragarm 12 vorgesehen. An seinem freien Ende befindet sich die Halterung 13, die hier durch einen abgebogenen Teil mit U-Profil gebildet wird. Sofern für die Halterungselemente 1 bzw. die Halterungen 13 ein Material mit elastischen Eigenschaften verwendet wird, bspw. Polyvinylchlorid oder Polycarbonat, wobei die U-Profile vorzugsweise im Querschnitt etwas mehr als einen Halbkreis bilden (Kreissegment von mehr als 180°), können die Stangen 4 (Fig. 1) direkt in diese U-Profil-Halterung eingesetzt und darin festgeklemmt werden. Selbstverständlich ist es möglich, die Halterungselemente als Kunststoffpressteil herzustellen oder die funktionellen Teile in herkömmlicher Weise miteinander zu verbinden, bspw. zu verkleben oder zu verschrauben.

Der Befestigungsteil 11 und der Tragarm 12 sind gegeneinander abgewinkelt, so dass der Tragarm 12 im montierten Zustand bezüglich der Vertikalen bzw. der Fensterscheibe um einen Winkel α geneigt ist, d.h. schräg nach oben ragt. Dieser Winkel α kann auch verstanden werden als Winkel zwischen der Aufnahmeöffnung 9 des Befestigungsteils 11 gegenüber dem Tragarm 12. Die Länge des Tragarmes 12 und dessen Neigung α kann variieren. Vorzugsweise wird die Länge so gewählt, dass die Plane ca. 5 bis 10 cm über das Fahrzeugdach zu liegen kommt. Über die Neigung α kann der seitliche Abstand der Stangen 4 gegenüber der Fahrzeugkarosserie beeinflusst werden, wobei der horizontale Versatz der Halterung 13 gegenüber den Fensterscheiben ca. 5 cm beträgt. Eine günstige Lage der Halterungselemente entsteht bei einem Neigungswinkel α zwischen 30° bis 45°, da dann der erwähnte Versatz in den erwünschten Bereichen liegt bei relativ geringer Länge der Tragarme 12, was zu einer guten Stabilität führt, insbesondere auch hinsichtlich der Kräfte, die z.B. bei stärkerem Wind auftreten können. Um die Verwendung der Vorrichtung auch im Zusammenhang mit montierten Dachgepäckträgern zu gewährleisten, können die Tragarme 12 mit einer relativ geringen Neigung und einer grossen Länge ausgebildet werden. In einer speziellen Ausführungsform kann auch der Tragarm 12 in seiner Länge verstellbar ausgebildet sein um den Abstand zwischen Plane und Dach beeinflussen zu können.

Sofern die Vorrichtung für Fahrzeuge mit nur zwei absenkbaren Fensterscheiben verwendet werden soll, können entweder zwei Halterungselemente 1 nebeneinander auf die gleiche Fensterscheibe aufgesetzt werden. Oder es können hier die Elemente auch einen breiten Befestigungsteil 11 aufweisen, der eine genügende Stabilität der Elemente gewährleistet. In gleicher Weise wird auch die Halterung 13 entweder breiter ausgelegt oder aber vorzugsweise als geschlossener Rohrabschnitt ausgebildet, in welchen die Stange 4 eingeschoben werden kann.

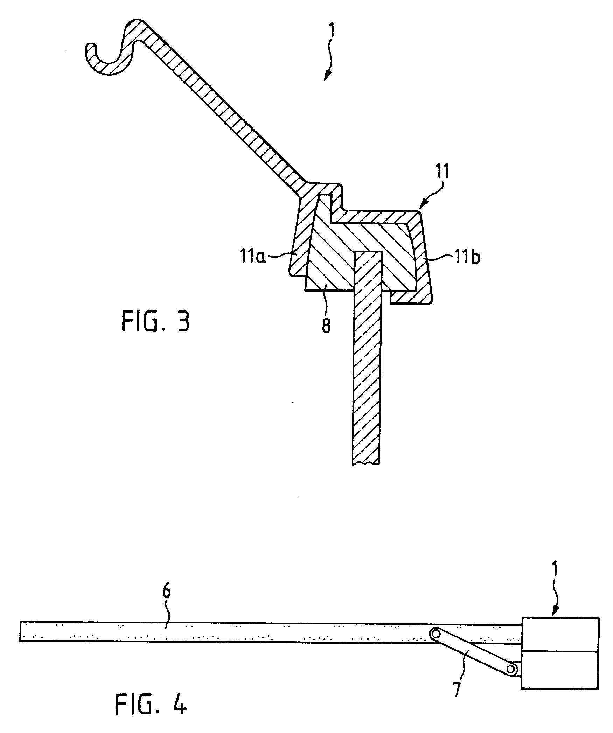

In einer weiteren Ausbildungsform gemäss Figur 3 kannen das Halterungselement 1 einen Befestigungsteil 11 aufweisen, der direkt auf die Fahrzeugtüren aufgesetzt werden können. Auf diese Weise besteht die Möglichkeit, die Halterungselemente derart zu befestigen, dass die Fenster nicht tangiert sind und demnach vollständig geschlossen werden können. Der Befestigungsteil 11 weist hier vorzugsweise zwei elastische Lappen 11a, 11b auf, wobei der Lappen 11b an seinem freien Ende abgewinkelt ist um die obere Kante 8 der Fahrzeugtüre zu umgreifen und so als Verankerungsteil zu wirken. Der Lappen 11a stützt seinerseits das Element an der Aussenseite dieser Kante 8 ab. Dank der entsprechenden Spannkraft des Befestigungsteils 11 sitzt das Halterungselement fest, direkt auf der Fahrzeugtüre.

Die Schutzplane 2 kann aus wasserabstossendem, evt. luftdurchlässigem Material gefertigt sein, damit bei Erhitzen der Luft zwischen Plane und Autodach diese besser entweichen kann. Eine Umwälzung der Luft ist aber auch dadurch gewährleistet, dass die Plane nicht an der Karosserie und dem Dach anliegt und jeweils zwischen Übergängen zwischen den seitlichen Lappen 3 Luftspalte bestehen können. Die Plane kann auch reflektierend beschichtet sein, um eine zusätzlichen Wärmeschutz zu gewährleisten. Die Schutzplane kann in ihrer Form in weiten Bereichen variieren. So können bspw. deren seitlichen Teile, die über die Fenster hinabgespannt werden, so ausgebildet werden, dass sie sich gegenseitig überlappen, d.h. keine Luftspalten mehr bestehen.

Selbstverständlich ist es auch möglich, die Schutzplane direkt an den Halterungselementen 1 zu befestigen und auf die Stangen 4 zu verzichten. Diesfalls kann die Plane durch eingenähte Kunststoffstreben oder in eingenähte Laschen schiebbare Streben verstärkt sein. Für diese Streben können herkömmliche Stangen, wie sie z.B. für Zelte bekannt sind, verwendet werden.

Eine weitere bevorzugte Ausführungsform wird dadurch erreicht, dass die seitlichen Stangen durch zwei separate Abschnitte gebildet werden. Jeder Stangenabschnitt 6 ist je durch ein zugehöriges Halterungselement (1) gehalten. Dabei ist an jeder Seite ein nach vorne und ein nach hinten ragender Abschnitt vorgesehen. Damit wird die Plane in Längsrichtung gut stabilisiert. Um die wegen der einseitigen Befestigung der Stangenabschnitte auftretenden Hebelkräfte auffangen zu können, ist es möglich, mindestens eine zusätzliche Stützstrebe 7 pro Stangenabschnitt 6 vorzusehen. Diese ist z.B., wie in Figur 4 dargestellt, im Abstand vom Halterungselement gelenkig mit dem Stangenabschnitt 6 verbunden und stützt diesen gegen das Halterungselement ab, in welchem die Stützstrebe 7 eingehängt werden kann. Diese Ausführungsform hat den Vorteil, dass (nach Hinaufklappen eines seitlichen Abschnitts der Plane) die Seitentüren einzeln geöffnet werden können, ohne dass die Befestigungsvorrichtungen demontiert oder entfernt werden müssen. In diesem Falle sind die Halterungen (13) der Halterungselemente (1) vorzugsweise in bereits beschriebener Form als Rohrabschnitt ausgebildet in die je ein Stangenabschnitt 6 eingeschoben und allenfalls mit einer Flügelschraube fixiert wird. Die Halterungen (13) können einen Anschlag aufweisen, so dass die Stangenabschnitte nach dem Einsetzen in eine definierte Lage kommen oder es kann eine durchgehende Öffnung vorgesehen sein, so dass die Stangenabschnitte je nach Fahrzeugmodell in Richtung der Front- oder Heckscheibe verschoben werden können.

Bei Nichtgebrauch kann die Plane auf kleinem Raum zusammengelegt und die Stangen 4 zusammengeschoben bzw. zerlegt werden. Die Halterungselemente 1 sind ebenfalls auf sehr kleinem Raum verstaubar, so dass sich die Schutzplane sowie deren Vorrichtung zur Befestigung leicht im Gepäckraum des Fahrzeuges unterbringen lassen.

Es ist zu bemerken, dass die erfindungsgemässen Halterungselemente im Zusammenhang mit Fahrzeugen auch zu anderen Zwecken als zur Befestigung einer Autoschutzplane eingesetzt werden können. Ihr Vorzug besteht in einer äusserst einfachen Montage bzw. Demontage ohne zusätzliche Schrauben etc. So können sie selbstverständlich zur Befestigung einer einfachen Blache für die Frontscheibe (Vereisungsschutz) eingesetzt werden oder als Halterungen für andere Autozubehörteile verwendet werden, wobei dann die Halterung (13) je nach Bedarf ausgestaltet ist; bspw. als Öse oder Haken.

## Patentansprüche

1. Halterungselement (1) zur Montage eines Zubehörs an einer Fahrzeugkarosserie, mit einer Halterung (13), einem Befestigungsteil (11) sowie einen diese verbindenden Tragarm (12) zur Erzeugung eines vertikalen und horizontalen Abstandes der Halterung (13) von der Fahrzeugkarosserie, dadurch gekennzeichnet, dass der Befestigungsteil (11) so ausgebildet ist, daß er sich auf die Fensterscheibe oder auf die obere Kante (8) einer Fahrzeugtüre abstützt.

2. Halterungselement nach Anspruch 1, **dadurch gekennzeichnet**, dass das Halterungselement (1) einstückig aus einem mehrfach gebogenen bzw. abgewinkelten Kunststoff- oder Metallstreifen besteht, wobei das eine freie Ende des Streifens durch zweifaches Abwinkeln ein im Querschnitt U-förmiges Profil als Befestigungsteil (11) aufweist, dessen Stegbreite 3 bis 8 mm und die Länge der Schenkel mindestens 20 mm beträgt und das andere freie Ende des Streifens zu einer im Querschnitt ein Kreissegment von mindestens 180° bildenden Halterung (13) gebogen ist.

3. Halterungselement nach Anspruch 1, **dadurch gekennzeichnet**, dass das Halterungselement (1) einen Befestigungsteil (11) mit zwei im Abstand voneinander verlaufenden Lappen (11a, 11b) zur Befestigung an der oberen Fahrzeugtürkante (8) aufweist.

4. Halterungselement nach Anspruch 1 oder 2, **dadurch gekennzeichnet**, dass der Befestigungsteil (11) einen Kamm (15) aufweist.

5. Halterungselement nach einem der vorstehenden Ansprüche, **dadurch gekennzeichnet**, dass die Halterung (13) als Rohrabschnitt zur Aufnahme einer Stange (4) ausgestaltet ist.

6. Halterungselement nach einem der vorstehenden Ansprüche, **dadurch gekennzeichnet**, dass der Befestigungsteil (11) und der Tragarm (12) derart gegeneinander abgewinkelt sind, dass die Aufnahmeöffnung (9) des Befestigungsteils (11) mit dem Tragarm (12) einen Winkel (α) von 30° bis 45° bildet.

7. Vorrichtung zur Befestigung einer Autoschutzplane mit einem Halterungselement nach Anspruch 1, **dadurch ge****kennzeichnet,** dass mindestens zwei, auf die Fensterscheiben oder die obere Kante einer Fahrzeugtüre aufsetzbare Halterungselemente (1) als direkte oder indirekte Abstützstellen für eine Schutzplane (2) vorgesehen sind.

8. Vorrichtung nach Anspruch 7, **dadurch gekennzeichnet**, dass zwei in ihrer Länge verstellbare Stangen in je mindestens eine der Halterungen (13) der montierten Halterungselemente (1) parallel zur Fahrtrichtung und im Abstand zur Karosserie eingesetzt sind um die Plane (2) zu stabilisieren.

9. Vorrichtung nach einem der Anspruche 7 oder 8, **dadurch gekennzeichnet**, dass je mindestens zwei Halterungselemente (1) mit als Rohrabschnitt ausgebildeten Halterungen (13) für jede Fahrzeugseite vorgesehen sind und dass in jede Halterung je ein zugehöriger Stangenabschnitt (6) eingesetzt ist.

10. Vorrichtung nach Anspruch 9, **dadurch gekennzeichnet**, dass pro Stangenabschnitt (6) eine Stützstrebe (7) vorgesehen ist, die den Stangenabschnitt gegen das Halterungselement (1) abstützt.

11. Vorrichtung nach einem der Ansprüche 7 bis 10, **dadurch gekennzeichnet**, dass die Abschnitte der Plane, die zur Abdeckung der Fenster bestimmt sind, je mindestens einen Saugnapf (5) zur Befestigung an den Fenstern oder der Karosserie aufweisen.

## Claims

1. Holding element (1) for fitting an accessory to a vehicle body, with a mounting (13), a fixing part (11) and a bracket (12) connecting the same for producing a vertical and horizontal spacing of the mounting (13) with respect to the vehicle body, characterized in that the fixing part (11) is constructed in such a way that it is supported on the window pane or on the upper edge (8) of a vehicle door.

2. Holding element according to claim 1, characterized in that the holding element (1) is made in one piece from a multiply bent or angled plastic or metal strip, one free end of the strip by double bending has a cross-sectionally U-shaped profile as the fixing part (11), whose web width is 3 to 8 mm and whereof the leg length is at least 20 mm, whilst the other free end of the strip is bent to form a mounting (13) forming in cross-section a circular segment of at least 180°.

3. Holding element according to claim 1, characterized in that the holding element (1) has a fixing part (11) with two spaced tabs (11a, 11b) for fixing to the upper vehicle door edge (8).

4. Holding element according to claim 1 or 2, characterized in that the fixing part (11) has a ridge (15).

5. Holding element according to one of the preceding claims, characterized in that the mounting (13) is designed as a tubular portion for receiving a rod (4).

6. Holding element according to one of the preceding claims, characterized in that the fixing part (11) and the bracket (12) are so angled against one another that the reception opening (9) of the fixing part (11) forms with the bracket (12) an angle (α) of 30 to 45°.

7. Apparatus for fixing a car awning with a holding element according to claim 1, characterized in that at least two holding elements (1) mountable on the window panes or the upper edge of a vehicle door are provided as direct or indirect support points for a protective awning (2).

8. Apparatus according to claim 7, characterized in that two length-adjustable rods are inserted in in each case at least one of the mountings (13) of the fitted holding elements (1) parallel to the direction of travel and spaced from the body in order to stabilize the awning (2).

9. Apparatus according to one of the claims 7 or 8, characterized in that in each case at least two holding elements (1) are provided with mountings (13), constructed as tubular portions, for each vehicle side and that in each mounting is in each case inserted one associated rod portion (6).

10. Apparatus according to claim 9, characterized in that for each rod portion (6) is provided a support strut (7), which supports the rod portion against the holding element (1).

11. Apparatus according to one of the claims 7 to 10, characterized in that the portions of the awning, which are intended for covering the window, in each case have at least one suction cup (5) for fixing to the windows or the body.

## Revendications

1. Elément de fixation (1) pour le montage d'un accessoire sur une carrosserie de véhicule, avec un dispositif de fixation (13), une partie de fixation (11) ainsi qu'un bras de support (12) reliant ceux-ci pour créer un écart vertical et horizontal entre le dispositif de fixation (13) et la carrosserie du véhicule, caractérisé en ce que la partie de fixation (11) est conçue de façon a s'appuyer sur la vitre de la fenêtre ou sur le bord supérieur (8) d'une portière de véhicule.

2. Elément de fixation selon la revendication 1, caractérisé en ce que l'élément de fixation (1) se compose d'un seul tenant d'une bande de plastique ou de métal recourbée ou repliée plusieurs fois, l'une des extrémités libres de la bande présentant par un double pliage un profil de section en U constituant une partie de fixation (11), dont la largeur d'écartement est de 3 à 8 mm et la longueur de bras d'au moins 20 mm et l'autre extrémité libre de la bande étant repliée pour former un dispositif de fixation (13) formant en section un segment de cercle d'au moins 180°.

3. Elément de fixation selon la revendication 1, caractérisé en ce que l'élément de fixation (1) présente une partie de fixation (11) avec deux pattes (11a, 11b) distantes l'une de l'autre pour la fixation sur le bord supérieure de la portière du véhicule (8).

4. Elément de fixation selon la revendication 1 ou 2, caractérisé en ce que la partie de fixation (11) présente une arête (15).

5. Elément de fixation selon l'une des revendications précédentes, caractérisé en ce que le dispositif de fixation (13) est conformé comme un segment de tubes destiné à recevoir une tige (4).

6. Elément de fixation selon l'une des revendications précédentes, caractérisé en ce que la partie de fixation (11) et le bras de support (12) sont repliés l'un par rapport à l'autre tel que l'ouverture de réception (9) de la partie de fixation (11) forme avec le bras de support (12) un angle ( ) de 30° à 45°.

7. Mécanisme pour la fixation d'une bâche de protection pour automobile avec un élément de fixation selon la revendication 1, caractérisé en ce qu'au moins deux éléments de fixation (11) pouvant être posés sur les vitres des fenêtres ou le bord supérieur d'une portière de véhicule sont prévus comme points d'appui directs ou indirects pour une bâche de protection (2).

8. Mécanisme selon la revendication 7, caractérisé en ce que deux tiges réglables en longueur sont introduites chacune dans au moins un des dispositifs de fixation (13) des éléments de fixation (1) montés parallèlement au sens de la marche et à distance de la carrosserie pour stabiliser la bâche (2).

9. Mécanisme selon l'une des revendications 7 ou 8, caractérisé en ce qu'au moins deux éléments de fixation (1) avec des dispositifs de fixation (13) conçus comme des segments de tube sont prévus de chaque côté du véhicule et en ce qu'un segment de tige (6) correspondant est introtuit dans chaque dispositif de fixation.

10. Mécanisme selon la revendication 9, caractérisé en ce qu'il est prévu pour chaque segment de tige (6) un étai d'appui (7) qui soutient le segment de tige par rapport à l'élément de fixation (1).

11. Mécanisme selon l'une des revendications 7 ou 10, caractérisé en ce que les sections de la bâche destinées à la couverture des fenêtres présentent chacune au moins une ventouse (5) pour la fixation sur les fenêtres ou sur la carrosserie.
